# EUROPÄISCHE PATENTSCHRIFT

(11) **EP 3 498 079 B1**
(45) Veröffentlichungstag und Bekanntmachung des Hinweises auf die Patenterteilung: **06.01.2021**
(21) Anmeldenummer: 18200081.0
(22) Anmeldetag: 12.10.2018
(51) Int. Cl.: A01F 25/16, A01B 69/00, G05D 1/02

(54) **VERFAHREN ZUR BEFÜLLUNG EINES SILOS MIT ERNTEGUT SOWIE VERTEILFAHRZEUG**
METHOD FOR FILLING A SILO WITH HARVESTED GOODS AND DISTRIBUTION VEHICLE
PROCÉDÉ DE REMPLISSAGE D'UN SILOS DE PRODUIT DE RÉCOLTE ET VÉHICULE DE DISTRIBUTION

(30) Priorität: 18.12.2017 DE 102017130300
(43) Veröffentlichungstag der Anmeldung: 19.06.2019
(73) Patentinhaber: CLAAS Selbstfahrende Erntemaschinen GmbH, 33428 Harsewinkel (DE)
(72) Erfinder: Krause, Thilo, 39249 Glinde (DE); Kriebel, Bastian, 48155 Münster (DE)
(74) Vertreter: CLAAS Gruppe

(56) Entgegenhaltungen:
- DE-A1-102008 063 852
- US-A1- 2007 079 977
- US-B2- 8 014 924

## Beschreibung

Die vorliegende Anmeldung betrifft ein Verfahren nach dem Oberbegriff von Anspruch 1 sowie ein Verteilfahrzeug nach dem Oberbegriff von Anspruch 11.

Die Aufschichtung von Erntegut, insbesondere von gehäckseltem Mais, innerhalb eines Silos sowie dessen anschließende Verdichtung sind zur Lagerung des Ernteguts von besonderer Bedeutung. Insbesondere kommt es darauf an, dass die Lagerung des Ernteguts möglichst unter anaeroben Bedingungen erfolgt, sodass das Erntegut nicht verfault. Zur Verdrängung des Sauerstoffes aus dem Erntegut wird selbiges nach dem Einbringen in das Silo typischerweise mit einem Verteilfahrzeug, das zugleich für die Verteilung des Ernteguts innerhalb des Silos zuständig ist, überfahren, wodurch das Erntegut verdichtet wird. Nach vollständiger Befüllung eines jeweiligen Silos wird selbiges in aller Regel mittels sogenannter Siloplane abgedeckt, sodass auch die oberste Schicht des Ernteguts möglichst von der Umgebungsluft abgeschottet ist.

Zwecks Verteilung des Ernteguts innerhalb eines Silos verfügt ein verwendetes Verteilfahrzeug über ein Schiebeschild, mittels dessen das Erntegut ausgehend von einer Abladestelle erfassbar und sodann in das Silo transportierbar ist. In aller Regel wird das Erntegut in das Silo geschoben. Zur Modellierung einer Oberfläche des in dem Silo befindlichen Ernteguts kann das Schiebeschild höhenverstellbar ausgebildet sein.

Verfahren sowie Verteilfahrzeuge der vorstehend beschriebenen Art sind im Stand der Technik bereits bekannt. Hierzu wird beispielhaft auf die deutsche Offenlegungsschrift DE 10 2008 063 852 A1 verwiesen. Diese offenbart ein Verfahren, mittels dessen die Möglichkeit geschaffen wird, die Verdichtung des Ernteguts zu steuern. Die dort zugrunde liegende Erfindung beruht auf der Erkenntnis, dass mit zunehmender Verdichtung des Ernteguts eine Reduktion einer Schichthöhe desselben im Zuge eines abermaligen Überfahrens mittels eines Verteilfahrzeugs sukzessive abnimmt. Die Steuerung sieht vor, die Verdichtung - und damit ein weitergehendes Überfahren des Ernteguts - einzustellen, sobald eine im Zuge der Verdichtung bewirkte Höhendifferenz einen vorbestimmten Grenzwert unterschreitet.

Aus der DE 10 2013106322 B4 ist es zudem bekannt, dass dem Verdichtungsfahrzeug zumindest frontseitig ein Schubschild zugeordnet ist. Dies hat den Vorteil, dass das in dem Silo befindliche Gut horizontal eingeebnet werden kann, bevor es verdichtet wird.

Grundsätzlich besteht gegenüber dem Stand der Technik das Bedürfnis, die Befüllung eines Silos inklusive der Verdichtung des jeweiligen Ernteguts derart zu optimieren, dass das Erntegut zumindest im Wesentlichen gleichmäßig verdichtet wird, sodass das Silo letztlich von homogenen Erntegutschichten gebildet ist.

Entsprechend ist es die Aufgabe der vorliegenden Anmeldung, ein Verfahren sowie ein Verteilfahrzeug vorzuschlagen, die besagte Prozesse gegenüber dem Stand der Technik weiter optimieren.

Die zugrunde liegende Aufgabe wird erfindungsgemäß mittels eines Verfahrens mit den Merkmalen des Anspruchs 1 gelöst. Vorteilhafte Ausgestaltungen ergeben sich aus den Unteransprüchen 2 bis 10.

Das erfindungsgemäße Verfahren sieht vor, dass im Zuge des Überfahrens des Ernteguts mittels des Verteilfahrzeugs fortwährend mittels mindestens einer Sensoreinrichtung, die an dem Verteilfahrzeug angeordnet ist, Informationen betreffend eine Oberflächentopographie des bereits in das Silo eingebrachten Ernteguts erfasst werden. Diese Informationen können beispielsweise derart ausgestaltet sein, dass die Oberfläche des Ernteguts gegenüber einem bestimmten Höhenniveau an bestimmten Stellen Erhöhungen und wiederum an anderen Stellen Vertiefungen aufweist. Mit anderen Worten können die Informationen zum Beispiel darüber Aufschluss geben, dass die Oberfläche des Ernteguts "uneben" ist. Vorteilhafterweise wird anhand der Informationen ein dreidimensionales Bild einer Oberfläche des innerhalb des Silos befindlichen Ernteguts gebildet. Diese Informationen werden sodann an eine Steuereinrichtung weitergeleitet. Letztere wird dazu verwendet, besagte Informationen zu verarbeiten und basierend darauf eine Arbeitshöhe des Schiebeschilds der Verteileinrichtung zu steuern. Diese Steuerung kann insbesondere mittelbar unter Zwischenschaltung einer Antriebseinrichtung vorgenommen werden, mittels derer die Arbeitshöhe des Schiebeschilds veränderbar ist. Die Steuerung der Arbeitshöhe erfolgt derart, dass das Erntegut sukzessive in Erntegutschichten mit in sich zumindest im Wesentlichen gleichmäßiger Schichthöhe aufgeschichtet wird.

Jede einzelne Erntegutschicht ist dadurch gekennzeichnet, dass Erntegut in das Silo eingebracht wird und nach der Einbringung einer bestimmten Menge des Ernteguts zunächst eine Verdichtung desselben vorgenommen wird, bevor weiteres Erntegut eingebracht wird. Die Schicht, die sich nach Einbringung der bestimmten Menge des Ernteguts ausbildet, bildet sodann eine Erntegutschicht. Eine typische Schichthöhe für eine solche Erntegutschicht kann beispielsweise in einem Bereich zwischen 20 und 50 cm liegen.

Unter einer "im Wesentlichen gleichmäßiger Schichthöhe" wird im Sinne der vorliegenden Anmeldung verstanden, dass eine Abweichung eines lokalen Höhenniveaus der Oberfläche des Ernteguts maximal um 10 % von einem Höhenniveau der Oberfläche abweicht, das mit einer jeweils gewünschten Schichthöhe der einzubringenden Erntegutschicht korrespondiert. Somit ist es beispielsweise denkbar, dass eine gewünschte Schichthöhe 50 cm betragen soll. In einem Bereich einer Vertiefung liegt jedoch das Höhenniveau einer Oberfläche des Ernteguts 15 cm unterhalb des Höhenniveaus, das mit der gewünschten Schichthöhe von 50 cm korrespondiert. Die Abweichung im Bereich der Vertiefung beträgt somit 30 %. Dies hat zur Folge, dass die Erntegutschicht im Sinne der vorliegenden Anmeldung keine "zumindest im Wesentlichen gleichmäßige Schichthöhe" aufweist. Es versteht sich, dass eine Abweichung lokaler Höhenniveaus der Oberfläche der jeweiligen Erntegutschicht von einem durchgängigen Höhenniveau vorteilhafterweise unterhalb von 5 %, weiter vorzugsweise unterhalb von 2 %, bezogen auf das mit der gewünschten Schichthöhe korrespondierende Höhenniveau liegt.

Das erfindungsgemäße Verfahren hat viele Vorteile. Insbesondere ermöglicht es, einen jeweiligen Maschinenführer des Verteilfahrzeugs von einer manuellen Veränderung der Arbeitshöhe des Schiebeschilds zu entbinden, sondern selbige derart automatisch von der Steuereinrichtung steuern zu lassen, dass sich die gewünschte gleichmäßige Schichthöhe der jeweiligen Erntegutschicht einstellt. Die Gleichmäßigkeit der Schichthöhe hat wiederum den Vorteil, dass die Verdichtung des Ernteguts ebenfalls in gleichmäßiger Weise erfolgt. Dem liegt die Überlegung zugrunde, dass ein zu erreichender Verdichtungsgrad grundsätzlich von der Schichthöhe des eingebrachten Ernteguts abhängig ist, wobei mit abnehmender Schichthöhe ein umso größerer Verdichtungsgrad erzielt werden kann. Gleichzeitig können die Schichthöhen nicht beliebig dünn ausgestaltet werden, um die Einbringleistung des Verteilfahrzeugs, das heißt die Menge an in dem Silo eingebauten Ernteguts pro Zeit, in einem wirtschaftlichen Bereich zu halten. Die Befüllung des Silos ist mittels des erfindungsgemäßen Verfahrens folglich besonders gleichmäßig und besonders einfach möglich, da die Steuerung die Gleichmäßigkeit der Schichthöhe der jeweils einzubauenden Erntegutschicht sicherstellt.

Ein weiterer Vorteil ist darin zu sehen, dass der Maschinenführer des Verteilfahrzeugs von seiner Aufgabe, die Arbeitshöhe des Schiebeschilds fortwährend den jeweiligen lokalen Bedingungen anzupassen, entbunden wird. Auf diese Weise ist die Arbeit des Befüllens des jeweiligen Silos deutlich angenehmer auszuführen, da das ansonsten fortwährend erforderliche, hohe Konzentrationsniveau reduziert werden kann, da die Steuereinrichtung nunmehr die Einstellung der Arbeitshöhe des Schiebeschilds vornimmt. Dies betrifft auch Szenarien, in denen das Verteilfahrzeug plötzlich unvorhergesehen tief in das Erntegut einsinkt, worauf hin das Schiebeschild angehoben werden muss, um eine bereits gebildete und fertig verdichtete Erntegutschicht nicht wieder "aufzureißen" bzw. zu "verletzen". Neben einer besseren Verdichtung des eingebrachten Ernteguts wird demzufolge auch die Betriebssicherheit des Verteilfahrzeugs mittels des erfindungsgemäßen Verfahrens verbessert und Doppelarbeit vermieden.

Das erfindungsgemäße Verfahren kann dann besonders vorteilhaft sein, wenn fortwährend relative und/oder absolute Positionsdaten des Verteilfahrzeugs erfasst werden. Dem liegt die Überlegung zugrunde, dass die Sensoreinrichtung womöglich lediglich zweidimensionale Daten erfassen kann, beispielsweise innerhalb einer in sich planen Scanebene. Die Erzeugung einer Information, die ein dreidimensionales Bild der Oberfläche des Ernteguts beinhaltet, muss in einem solchen Fall aus einer Vielzahl von Einzeldatensätzen, insbesondere Einzelbildern, zusammengesetzt werden, die mittels der Sensoreinrichtung erfasst werden. Die notwendige Information, welcher der Datensätze welcher "Stelle" des Ernteguts innerhalb des Silos zuzuordnen ist, wird dann mittels der genannten Positionsdaten beigebracht. Aus beiden Datensätzen, nämlich den mittels der Sensoreinrichtung erfassten Daten und den Positionsdaten werden dann vorzugsweise derart kombiniert, dass sich ein dreidimensionales Abbild einer Oberfläche des Ernteguts ergibt.

Besagte Positionsdaten können beispielsweise mittels eines Odometriemodells ermittelt werden, wobei vorzugsweise zumindest eine Fahrgeschwindigkeit und ein Lenkwinkel des Verteilfahrzeugs berücksichtigt werden. Auf diese Weise kann ausgehend von einer bekannten absoluten Position des Verteilfahrzeugs im Raum nachvollzogen werden, an welcher Stelle relativ zu der absoluten Position sich das Verteilfahrzeug befindet. Mithin ist dann auch bekannt, welchem Bereich innerhalb des Silos die mittels der Sensoreinrichtung erfassten Informationen zuzuordnen sind.

Weiterhin kann es von Vorteil sein, wenn fortwährend eine Positionsänderung des Verteilfahrzeugs erfasst wird, wobei vorzugsweise Änderungen der absoluten Position des Verteilfahrzeugs im Raum (typischerweise ausgedrückt in X-,Y- und Z-Koordinaten), eine Neigung des Verteilfahrzeugs um seine Längsachse, eine Neigung des Verteilfahrzeugs um seine Querachse und/oder eine Fahrrichtung des Verteilfahrzeugs berücksichtigt werden. Die Querachse beschreibt dabei diejenige Achse des Verteilfahrzeugs, die senkrecht auf der Längsachse steht und gemeinsam mit der Längsachse eine in sich horizontale Ebene aufspannt, sofern das Verteilfahrzeug "gerade" auf einem Untergrund aufsteht. Die jeweiligen Daten betreffend die Positionsänderung des Verteilfahrzeugs können genutzt werden, um eine Position Verteilfahrzeugs innerhalb des Silos ausgehend von einer bekannten Anfangsposition nachzuvollziehen. Auf diese Weise kann ein mittels der Sensoreinrichtung erfasster Bereich innerhalb des Silos zugeordnet werden, sodass die Informationen betreffend die Oberflächentopographie des Ernteguts verarbeitbar sind.

In einer vorteilhaften Ausgestaltung des erfindungsgemäßen Verfahrens werden die Schichthöhen der einzelnen Erntegutschichten jeweils vordefiniert. Im Zuge der Verteilung von Erntegut innerhalb des Silos wird sodann mittels der Steuereinrichtung eine fortwährende Anpassung der Arbeitshöhe des Schiebeschilds entsprechend der vordefinierten Schichthöhe vorgenommen. Insbesondere ist es denkbar, dass das Schiebeschild abgesenkt wird, um eine unerwünschte Erhöhung der Erntegutschicht abzutragen und an anderer Stelle angehoben wird, um Erntegut gezielt an einer jeweiligen Stelle abzulegen. Insbesondere ist die Steuereinrichtung dazu geeignet, anhand der von der Sensoreinrichtung erfassten Informationen eine "Schiebeschildtrajektorie" im Raum zu bestimmen, entlang derer eine Unterkante des Schiebeschilds sich im Zuge Fahrt des Verteilfahrzeugs bewegen sollte, um die gewünschte Schichthöhe der Erntegutschicht zu erzeugen.

In einer besonders vorteilhaften Ausgestaltung des erfindungsgemäßen Verfahrens wird die Arbeitshöhe des Schiebeschilds fortwährend in Abhängigkeit von den erfassten Informationen der Sensoreinrichtung verändert, sodass sich im Zuge der Einbringung der jeweiligen Erntegutschicht zumindest in eine Plateaubereich des Silos eine ebene Oberflächentopographie des Ernteguts einstellt. Der "Plateaubereich" beschreibt in diesem Zusammenhang einen Bereich des Silos, in dem die Oberfläche der obersten Erntegutschicht zumindest im Wesentlichen in einer horizontalen Ebene liegt. Abweichend von dem Plateaubereich umfassen die meisten Silos einen Rampenbereich, über den ein jeweiliges Verteilfahrzeug ausgehend von einem Höhenniveau einer Geländeoberkante in das Silo einfährt. Dabei versteht es sich, dass mit fortschreitendem Einbringen von Erntegut sich innerhalb des Silos gewissermaßen ein Berg bildet, auf den das Verteilfahrzeug über den Rampenbereich auffahren muss.

Das erfindungsgemäße Verfahren weiter ausgestaltend werden mit zunehmender Gesamthöhe des innerhalb des Silos aufgeschichteten Ernteguts die vordefinierten Schichthöhen der Erntegutschichten sukzessive reduziert. Dem liegt die Überlegung zugrunde, dass weiter unten innerhalb des Silos angeordnete Erntegutschichten zusätzlich zu der Verdichtung mittels Überfahren mittels des Verteilfahrzeugs ferner im weiteren Fortgang der Befüllung des Silos zudem mittels der Gewichtskraft der nachfolgenden Erntegutschichten verdichtet werden. Mit anderen Worten wird eine gewisse Verdichtungsleistung mittels der nachfolgenden Erntegutschichten erbracht. Weiter oben gelegene Erntegutschichten können diesen Vorteil nicht nutzen und müssen folglich zunehmend allein durch Wirkung des Verteilfahrzeugs verdichtet werden. Entsprechend ist es sinnvoll, die oberen Erntegutschichten dünner auszuführen, um ein hinreichendes Verdichtungsergebnis zu erhalten.

In einer weiterhin vorteilhaften Ausgestaltung des erfindungsgemäßen Verfahrens werden der Steuereinrichtung zusätzlich zu den Informationen betreffend die Oberflächentopographie Informationen betreffend eine Geometrie des Silos zugeleitet. Dies ist insoweit von Vorteil, als anhand der Geometrie ermittelbar ist, wie viel Erntegut in das Silo einzubringen ist, um eine jeweils im Entstehen begriffenen Erntegutschicht mit ihrer zugehörigen, vordefinierten Schichthöhe zu erstellen. Insbesondere lässt sich anhand der Geometrie des Silos ein erforderliches Volumen berechnen, das unter Berücksichtigung eines jeweils gewünschten Verdichtungsgrades einen Rückschluss auf das Volumen des Ernteguts zulässt, dass zur Erstellung der jeweiligen Erntegutschicht benötigt wird. Die Informationen können insbesondere mittels der Steuereinrichtung verarbeitet werden. Dabei kann es von Bedeutung sein, nicht mehr Erntegut in das Silo einzubringen, als noch zur Fertigstellung einer jeweiligen Erntegutschicht erforderlich ist. Dies führt nämlich in der Regel dazu, dass "überschüssiges" Erntegut typischerweise an den Rändern des Silos, das heißt an seitlich das Silo begrenzenden Wänden, aufgehäuft wird und nicht mehr hinreichend verdichtet werden kann. Mithin können die erfassten Informationen betreffen die Geometrie des Silos auch verwendet werden, um zu bestimmen, wie viel Erntegut noch erforderlich ist, um eine jeweilige Erntegutschicht fertigzustellen.

In diesem Zusammenhang kann es weiterhin vorteilhaft sein, die Informationen betreffend die Geometrie des Silos mittels der Sensoreinrichtung zu erfassen. Dies kann insbesondere im Zuge der Befahrung des Silos mittels des Verteilfahrzeugs erfolgen, in dem die an dem Verteilfahrzeug angeordnete Sensoreinrichtung entsprechende Daten einmalig oder fortwährend erhebt.

Weiterhin ist es denkbar, die Steuereinrichtung mit Informationen betreffend ein Füllvolumen des Schiebeschilds zu versorgen, anhand derer die Steuereinrichtung die Arbeitshöhe des Schiebeschilds einstellen kann. Diese Einstellung erfolgt derart, dass eine infolge der Arbeitshöhe des Schiebeschilds effektiv an der Abladestelle übernommene Erntegutmenge auf einen ermittelten Erntegutbedarf abgestimmt wird, der notwendig ist, um die jeweils zu erstellende Erntegutschicht mit der vordefinierten Schichthöhe fertig zu stellen. Dieser Verfahrensschritt ist insbesondere dann vorteilhaft, wenn eine jeweilige Erntegutschicht kurz vor ihrer Fertigstellung steht und lediglich noch eine bestimmte Menge an Erntegut erforderlich ist, um die Erntegutschicht mit ihrer gleichmäßigen Schichthöhe abzuschließen. Würde das Verteilfahrzeug mit seinem Schiebeschild eine zu große Menge an Erntegut von der Abladestelle übernehmen und in das Silo einbringen, bestünde nach Fertigstellung der jeweiligen Erntegutschicht ein Überschuss an Erntegut, dass für die Erntegutschicht nicht weiter benötigt wird. Zwecks Verdichtung der jeweiligen Erntegutschicht, die typischerweise vor dem Einbringen weiteren Ernteguts zunächst vorzunehmen ist, müsste sodann das überschüssige Erntegut wieder aus dem Silo ausgefahren werden. Anderenfalls ergibt sich die oben beschriebene Problematik der ungewollten Anhäufung von Erntegut in dem Silo insbesondere an den Rändern des Silos, das eine zuverlässige Verdichtung erschwert.

Ferner kann es von Vorteil sein, wenn mittels der Sensoreinrichtung Informationen betreffend ein Volumen von Erntegut erfasst werden, das sich an der Abladestelle befindet. Diese Informationen werden sodann an die Steuereinrichtung weitergeleitet. Letztere kann in Kenntnis des an der Abladestelle verfügbaren Volumens an Erntegut die Arbeitshöhe des Schiebeschilds derart steuern, dass die erforderliche Leistung, die benötigt wird, um eine bestimmte Erntegutmenge von der Abladestelle zu übernehmen, nicht die Leistungsfähigkeit des Verteilfahrzeugs überschreitet. Hierzu kann es ebenso sinnvoll sein, zusätzlich zu einer reinen Ermittlung des Volumens des an der Abladestelle befindlichen Ernteguts auch eine Geometrie eines Ernteguthaufens zu erfassen, der an der Abladestelle vorhanden ist.

In vorrichtungstechnischer Hinsicht wird die zugrunde liegende Aufgabe erfindungsgemäß mittels eines Verteilfahrzeugs mit den Merkmalen des Anspruchs 9 gelöst. Vorteilhafte Ausgestaltungen ergeben sich aus den Unteransprüchen 10 bis 12.

Das erfindungsgemäße Verteilfahrzeug umfasst mindestens eine Sensoreinrichtung, mittels derer Informationen betreffend eine Oberflächentopographie von bereits in das Silo eingebrachten Ernteguts erfassbar ist. Zudem verfügt das Verteilfahrzeug über mindestens eine Steuereinrichtung, mittels derer diese Informationen verarbeitbar sind. Die Steuereinrichtung ist zudem dazu geeignet, die Antriebseinrichtung die Schiebeschilds anzusteuern, sodass die Steuereinrichtung Einfluss auf die Arbeitshöhe des Schiebeschilds nehmen kann. Erfindungsgemäß die Steuereinrichtung dazu geeignet, die Arbeitshöhe des Schiebeschilds derart einzustellen, dass innerhalb des Silos sukzessive Erntegutschichten mit in sich zumindest im Wesentlichen gleichmäßiger Schichthöhe aufschichtbar sind.

Das erfindungsgemäße Verteilfahrzeug ist besonders gut geeignet, das vorstehend beschriebene, erfindungsgemäße Verfahren auszuführen. Die damit einhergehenden Vorteile sind vorstehend bereits dargelegt. Insbesondere ist es ohne Weiteres möglich, jeweilige Erntegutschichten mit gleichmäßiger Schichthöhe in das Silo einzubringen, wodurch eine gleichmäßige Verdichtung des Ernteguts sichergestellt ist. Ein manueller Eingriff des Maschinenführers sowie ein damit verbundenes Risiko der Fehlbedienung entfallen damit.

In einer vorteilhaften Ausgestaltung des erfindungsgemäßen Verteilfahrzeugs umfasst die Sensoreinrichtung mindestens einen Laser, mindestens eine Kamera, mindestens einen Ultraschallsensor und/oder mindestens einen Radar. Eine derartige Sensoreinrichtung ist besonders gut geeignet, die erforderlichen Informationen zu erfassen, derer es bedarf, um schließlich mittels der Steuereinrichtung die gewünschte Steuerung der Arbeitshöhe des Schiebeschilds zu ermöglichen.

Weiterhin ist es im Zusammenhang mit der Sensoreinrichtung von Vorteil, wenn diese in einer Höhe gemessen von einer unteren Aufstandsfläche des Verteilfahrzeugs von mindestens 1,0 m, vorzugsweise mindestens 1,5 m, weiter vorzugsweise mindestens 2,0 m, angeordnet ist. Auf diese Weise ist es der Sensoreinrichtung möglich, dass Erntegut bzw. eine jeweilige Oberfläche desselben aus einer erhöhten Position zu erfassen und gewissermaßen einen bestimmten "Überblick" zu erhalten. Insbesondere erlaubt die erhöhte Anordnung die Erfassung eines vergleichsweise großen Erfassungsbereichs der Oberfläche, sodass es möglich ist, die Oberfläche des Ernteguts über das gesamte Silo hinweg zu erfassen, ohne dass das Verteilfahrzeug zuvor das gesamte Silo befahren haben muss. Auf diese Weise ist es möglich, die Oberflächentopographie des bereits eingebrachten Ernteguts selbst dann zumindest im Wesentlichen für das gesamte Silo zu erfassen, wenn das Verteilfahrzeug in einem jeweiligen Arbeitsgang lediglich einen bestimmten Bereich des Silos befährt. In einer besonders vorteilhaften Ausgestaltung kann die Sensoreinrichtung an einem oberen Ende, beispielsweise einem Dach, einer Fahrerkabine des Verteilfahrzeugs angeordnet sein.

Ferner kann ein solches Verteilfahrzeug vorteilhaft sein, das mindestens ein Messmittel umfasst, mittels dessen eine absolute Position des Verteilfahrzeugs im Raum, eine Neigung des Verteilfahrzeugs um dessen Längsachse, eine Neigung des Verteilfahrzeugs um dessen Querachse und/oder eine Fahrrichtung des Verteilfahrzeugs erfassbar ist. Eine absolute Position des Verteilfahrzeugs kann beispielsweise mittels Sattelitennavigationsdaten ermittelt werden, beispielsweise mittels des GPS Systems oder des Galileo Systems. Mittels eines auf diese Weise ausgestatteten Verteilfahrzeugs kann das erfindungsgemäße Verfahren besonders einfach durchgeführt werden, wie vorstehend erläutert ist. Insbesondere ist es möglich, gemeinsam mittels der Positionsdaten und der mittels der Sensoreinrichtung erfassten Informationen ein dreidimensionales Bild einer Oberfläche des innerhalb des Silos befindlichen Ernteguts zu erzeugen.

Das erfindungsgemäße Verfahren sowie das erfindungsgemäße Verteilfahrzeug werden nachstehend anhand eines Ausführungsbeispiels, das in den Figuren dargestellt ist, näher erläutert. Es zeigt:
- Fig. 1:: Einen schematischen Querschnitt durch einen Silo mitsamt einer davor angeordneten Abladestelle sowie einem erfindungsgemäßen Verteilfahrzeug,
- Fig. 2:: Einen schematischen Querschnitt durch ein Silo, wobei ein erfindungsgemäßes Verteilfahrzeug eine Menge Erntegut in das Silo einbringt, und
- Fig. 3:: Den schematischen Querschnitt gemäß Figur 2, wobei die eingebrachte Menge Erntegut in das Silo eingebaut ist.

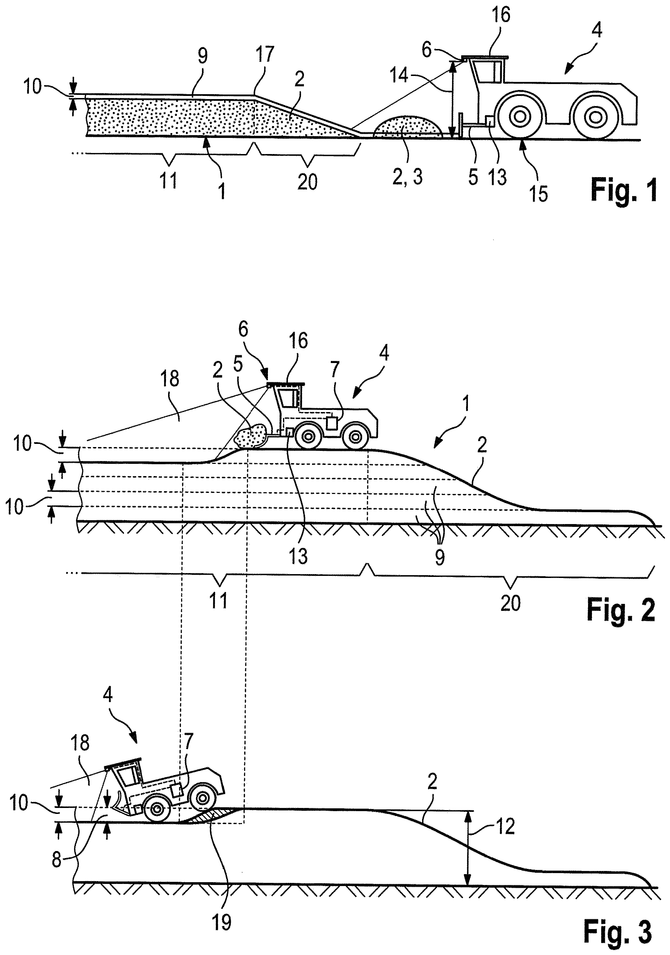

Das Ausführungsbeispiel, das in den **Figuren 1 bis 3** dargestellt ist, umfasst ein Silo **1**, das bereits mit einer bestimmten Menge Erntegut **2** befüllt ist. Das Silo **1** ist hier als Flachsilo ausgebildet, wobei das Erntegut **2** von gehäckseltem Mais gebildet ist. In unmittelbarer Nähe zu dem Silo **1** befindet sich eine Abladestelle **3**, an der in den Figuren nicht dargestellte Transportfahrzeuge gehäckseltes Erntegut **2** abladen können, damit dieses mittels eines Verteilfahrzeugs **4** in das Silo **1** eingebracht werden kann. In dem gezeigten Beispiel befindet sich an der Abladestelle **3** ein Ernteguthaufen. Das Silo **1** umfasst in dem gezeigten Beispiel einen Plateaubereich **11** sowie einen Rampenbereich **20.** In dem Plateaubereich **11** wird das Erntegut **2** zumindest im Wesentlichen eben aufgeschüttet, während der Rampenbereich **20** dazu dient, dass ein jeweiliges Verteilfahrzeug **4** auf das Silo **1** auffahren kann.

Weiterhin umfasst das Ausführungsbeispiel ein erfindungsgemäßes Verteilfahrzeug **4**, das frontseitig mit einem höhenverstellbaren Schiebeschild **5** ausgestattet ist. Die Höhenverstellbarkeit des Schiebeschilds **5** wird mittels einer Antriebseinrichtung **13** realisiert, die mit dem Schiebeschild **5** zusammenwirkt. In Abhängigkeit von einer Arbeitshöhe **8** des Schiebeschilds **5** kann das Verteilfahrzeug **4** eine bestimmte Menge an Erntegut von der Abladestelle **3** übernehmen und in der Silo **1** einbringen. Das Schiebeschild **5** beschreibt dabei mit einer Unterkante im Zuge der Bewegung des Verteilfahrzeugs **4** eine Schiebeschildtrajektorie **17**, die gewissermaßen einen Weg der Unterkante des Schiebeschilds **5** im Raum darstellt. Sofern besagte Schiebeschildtrajektorie **17** oberhalb eines jeweiligen Untergrundes verläuft und damit die Arbeitshöhe **8** des Schiebeschildes größer null ist, wird das Verteilfahrzeug **4** entlang seiner Fahrstrecke fortwährend Teile des übernommenen Ernteguts **2** verlieren und damit sukzessive auf den jeweiligen Untergrund auftragen bzw. aufschichten. Nach diesem Prinzip lassen sich grundsätzlich nacheinander einzelne Erntegutschichten **9** innerhalb des Silos **1** erstellen, die jeweils mit einer bestimmten Schichthöhe **10** ausgestattet sind. Die Schichthöhen **10** der einzelnen Erntegutschichten **9** sind dabei typischerweise nicht von identischer Mächtigkeit, sondern nehmen über eine Gesamthöhe **12** des Ernteguts hinweg betrachtet nach oben hin ab.

Gemäß vorstehenden Erläuterungen ist es nunmehr vorteilhaft, jeweilige Erntegutschichten **9** mit möglichst gleichmäßigen Schichthöhen **10** auszubilden, da auf diese Weise eine besonders gleichmäßige Verdichtung des Ernteguts **2** erzielt werden kann. Um dies zu erreichen ist das Verteilfahrzeug **4** erfindungsgemäß mit einer Sensoreinrichtung **6** ausgestattet, die hier von einem Laserarray gebildet ist. Die Sensoreinrichtung **6** ist in einer Höhe **14** oberhalb einer Aufstandsfläche **15** des Verteilfahrzeugs **4** angeordnet, die hier ca. 3,0 m beträgt. Die Sensoreinrichtung **6** dabei an einem oberen Ende einer Fahrerkabine **16** des Verteilfahrzeugs **4** montiert. Mittels dieser Sensoreinrichtung **6** ist das Verteilfahrzeug **4** dazu in der Lage, eine Oberflächenkontur das bereits in das Silo **1** eingebrachten Ernteguts **2** optisch zu erfassen, wobei die Sensoreinrichtung **6** einen gewissen Erfassungsbereich **18** gleichzeitig erfassen kann. Aufgrund der erhöhten Anordnung der Sensoreinrichtung **6** ist es dabei nicht erforderlich, mit dem Verteilfahrzeug **4** und jede Stelle des Silos **1** individuell abzufahren, um diese mittels der Sensoreinrichtung **6** zu erfassen. Weiterhin umfasst das Verteilfahrzeug **4** in den Figuren nicht dargestellte Messmittel, mittels derer Positionsdaten des Verteilfahrzeugs **4** erfassbar sind. Insbesondere ist es möglich, eine Positionsänderung des Verteilfahrzeugs **4** ausgehend von einer bekannten absoluten Position zu erfassen, wobei auf diese Weise erhaltene Daten mit der Sensoreinrichtung **6** erfassten Informationen zu kombinieren und auf diese Weise eine dreidimensionale Oberflächentopographie des Ernteguts **2** zu ermitteln.

Die mittels der Sensoreinrichtung **6** erhaltenen Informationen werden an eine Steuereinrichtung **7** weitergeleitet, mittels derer sie verarbeitbar sind. Auch kann die Steuereinrichtung **7** dazu geeignet sein, die jeweiligen Daten des Messmittels mit denen der Sensoreinrichtung **6** zu kombinieren und diese zu verarbeiten. Weiterhin ist die Steuereinrichtung **7** dazu in der Lage, anhand der erhaltenen Informationen zu bestimmen, an welchen Stellen des Silos **1** womöglich noch Erntegut **2** eingebracht oder abgetragen werden muss, um die jeweilig im Entstehen begriffene Erntegutschicht **9** mit einer zumindest im Wesentlichen gleichmäßigen Schichthöhe **10** auszustatten. In Abhängigkeit der gewonnenen Erkenntnisse ist die Steuereinrichtung **7** dazu geeignet, das Schiebeschild **5** anzusteuern, sodass letzteres seine Arbeitshöhe **8** verändert. In dem gezeigten Beispiel wirkt die Steuereinrichtung **7** hierzu unmittelbar mit der Antriebseinrichtung **13** des Schiebeschilds **5** zusammen, die letztlich die Verstellung der Arbeitshöhe **8** vornimmt.

Insbesondere kann die Arbeitshöhe **8** derart gesteuert werden, dass in einem Bereich des Silos **1**, in den die gewünschte Schichthöhe **10** jeweiligen Erntegutschichten **9** bereits erreicht ist, auf null gestellt wird, sodass das Verteilfahrzeug kein Erntegut "abgelegt" sondern - falls nötig - Erntegut abträgt, dass zu hoch aufgeschichtet wurde und damit die gewünschte Schichthöhe **10** übersteigt. Eine entsprechende Darstellung des Verteilfahrzeugs **4**, dessen Schiebeschild **5** mit einer Arbeitshöhe **8** von null eingestellt ist, ist schematisch in **Figur 2** dargestellt.

In einem Bereich des Silos **1** hingegen, in den noch Erntegut **2** einzubringen ist, um die gewünschte Schichthöhe **10** zu erzielen, ist es denkbar, die Arbeitshöhe **8** des Schiebeschilds **5** anzuheben, sodass - wie vorstehend beschrieben - von dem Verteilfahrzeug **4** mitgeführtes Erntegut **2** gewissermaßen abgelegt und auf diese Weise die Erntegutschichten **9** erstellt wird. Ferner ist es denkbar, die Erstellung einer jeweiligen Erntegutschichten **9** ausgehend von einem bereits gebildeten Bereich derselben vorzunehmen, in dem weiteres Erntegut **2** gewissermaßen ausgehend von dem erhöhten Höhenniveau der neuen Erntegutschichten **9** auf das demgegenüber abgesenkte Höhenniveau der zuvorigen Erntegutschichten **9** aufgeschoben wird. Dies ist auch mittels einer Arbeitshöhe **8** des Schiebeschilds **5** möglich, die null beträgt. Letztgenanntes Vorgehen ist schematisch im Übergang von **Figur 2** hin zu **Figur 3** dargestellt, wobei mittels des Schiebeschilds **5** mitgeführtes Erntegut **2** abgelegt wird, sodass sich ein verfüllter Bereich **19** der im Entstehen begriffenen Erntegutschicht **9** bildet.

Die Verstellbarkeit der Arbeitshöhe **8** des Schiebeschilds **9** mittels der Steuereinrichtung **7** kann zudem dafür genutzt werden, lediglich eine bestimmte Menge des Ernteguts **2** von der Abladestelle **3** zu übernehmen. Hierbei gilt, dass eine umso höher eingestellte Arbeitshöhe **8** grundsätzlich dazu führt, dass eine geringere Menge an Erntegut **2** von der Abladestelle **3** übernommen wird. Die Steuereinrichtung **7** ist insbesondere dazu geeignet, die Arbeitshöhe **8** des Schiebeschilds **5** derart zu steuern, dass eine bestimmte Menge an Erntegut **2** übernommen wird, beispielsweise um eine jeweils im Entstehen begriffene Erntegutschicht **9** fertig zu stellen. Ebenso ist es denkbar, dass eine übernommene Erntegutmenge auf ein bestimmtes Maß begrenzt werden soll, um die maximale Leistungsfähigkeit des Verteilfahrzeugs **4** nicht zu überschreiten.

Im Ergebnis ist die Kombination aus Sensoreinrichtung **6**, Steuereinrichtung **7** und Schiebeschild **5** dazu geeignet, die Schichthöhe **10** einer jeweiligen Erntegutschicht **9** gewissermaßen automatisch auf ein vordefiniertes Niveau einzustellen, wobei die Erntegutschicht **9** mit einer gleichmäßigen Schichthöhe **10** erstellt wird. Ergänzend kann eine Planung vorgenommen werden, wie viel Erntegut **2** das Verteilfahrzeug **4** in einem jeweiligen Arbeitsgang von der Abladestelle **3** übernehmen und in dem Silo **1** verteilen soll. Eine fortwährende Erfassung der Oberflächentopographie des Ernteguts **2** erlaubt zudem eine ständige Aktualisierung der Arbeitshöhe **8** des Schiebeschilds **5**, die im Zuge der Überfahrt des Ernteguts **2** mittels des Verteilfahrzeugs **4** eine fortwährende Vergleichmäßigung der Schichthöhe **10** ermöglicht.

### Bezugszeichenliste

- 1: Silo
- 2: Erntegut
- 3: Abladestelle
- 4: Verteilfahrzeug
- 5: Schiebeschild
- 6: Sensoreinrichtung
- 7: Steuereinrichtung
- 8: Arbeitshöhe des Schiebeschilds
- 9: Erntegutschicht
- 10: Schichthöhe einer Erntegutschicht
- 11: Plateaubereich
- 12: Gesamthöhe des Ernteguts
- 13: Antriebseinrichtung
- 14: Höhe der Sensoreinrichtung
- 15: Aufstandsfläche
- 16: Fahrerkabine
- 17: Schiebeschildtrajektorie
- 18: Erfassungsbereich
- 19: verfüllter Bereich
- 20: Rampenbereich

## Patentansprüche

1. Verfahren zur Befüllung eines Silos (1) mit Erntegut (2), insbesondere eines Flachsilos mit gehäckseltem Mais, umfassend die folgenden Verfahrensschritte:
a) Erntegut (2) wird an einer Abladestelle (3) an dem Silo (1) abgeladen.
b) Das abgeladene Erntegut (2) wird mittels eines Verteilfahrzeugs (4) in das Silo (1) eingebracht, wobei das Erntegut (2) mithilfe eines Schiebeschilds (5) des Verteilfahrzeugs (4) innerhalb des Silos (1) verteilt und dabei sukzessive aufgeschichtet wird.
c) Im Zuge der Einbringung weiteren Ernteguts (2) in das Silo (1) wird bereits eingebrachtes Erntegut (2) mittels des Verteilfahrzeugs (4) überfahren, wodurch das Erntegut (2) verdichtet wird,
**gekennzeichnet durch** die folgenden Verfahrensschritte:
d) Mittels einer an dem Verteilfahrzeug (4) angeordneten Sensoreinrichtung (6) werden zumindest im Zuge des Überfahrens des Ernteguts (2) fortwährend Informationen betreffend eine Oberflächentopographie des bereits in das Silo (1) eingebrachten Ernteguts (2) erfasst, die sodann an eine Steuereinrichtung (7) geleitet werden.
e) Mittels der Steuereinrichtung (7) werden die Informationen verarbeitet, sodass die Steuereinrichtung (7) dazu geeignet ist, eine Arbeitshöhe (8) des Schiebeschilds (5) derart zu steuern, dass das Erntegut (2) sukzessive in Erntegutschichten (9) mit in sich zumindest im Wesentlichen gleichmäßiger Schichthöhe (10) aufgeschichtet wird.

2. Verfahren nach Anspruch 1, **dadurch gekennzeichnet, dass** fortwährend relative und/oder absolute Positionsdaten des Verteilfahrzeugs (4) erfasst werden, wobei vorzugsweise die die mittels der Sensoreinrichtung (6) erfassten Informationen derart mit den Positionsdaten kombiniert werden, dass sich ein dreidimensionales Abbild einer Oberfläche des Ernteguts (2) ergibt.

3. Verfahren nach Anspruch 2, **dadurch gekennzeichnet, dass** die Positionsdaten mittels eines Odometriemodells ermittelt werden, wobei zumindest eine Fahrgeschwindigkeit und ein Lenkwinkel des Verteilfahrzeugs (4) berücksichtigt werden.

4. Verfahren nach Anspruch 2 oder 3, **dadurch gekennzeichnet, dass** fortwährend eine Positionsänderung des Verteilfahrzeugs (4) erfasst wird, wobei vorzugsweise Änderungen der absoluten Position des Verteilfahrzeugs (4) im Raum, eine Neigung des Verteilfahrzeugs (4) um seine Längsachse, eine Neigung des Verteilfahrzeugs (4) um seine Querachse und/oder eine Fahrrichtung des Verteilfahrzeugs (4) berücksichtigt werden.

5. Verfahren nach einem der Ansprüche 1 bis 4, **dadurch gekennzeichnet, dass** die Schichthöhen (10) der einzelnen Erntegutschichten (9) jeweils vordefiniert werden, wobei mittels der Steuereinrichtung (7) eine fortwährende Anpassung der Arbeitshöhe (8) des Schiebeschilds (5) entsprechend der vordefinierten Schichthöhe (10) der jeweils im Entstehen begriffenen Erntegutschicht (9) vorgenommen wird.

6. Verfahren nach einem der Ansprüche 1 bis 5, **dadurch gekennzeichnet, dass** im Zuge der Einbringung einer jeweiligen Erntegutschicht (9) die Arbeitshöhe (8) des Schiebeschilds (5) in Abhängigkeit von den erfassten Informationen der Sensoreinrichtung (6) fortwährend verändert wird, sodass sich im Zuge der Einbringung der jeweiligen Erntegutschicht (9) zumindest in einem Plateaubereich (11) des Silos (1) eine ebene Oberflächentopographie des Ernteguts (2) einstellt.

7. Verfahren nach einem der Ansprüche 1 bis 6, **dadurch gekennzeichnet, dass** der Steuereinrichtung (7) zusätzlich Informationen betreffend eine Geometrie des Silos (1) zugeleitet werden, mittels derer zur Erreichung der vordefinierten Schichthöhe (10) einer jeweils einzubringenden Erntegutschicht (9) eine hierfür benötigte Einbringmenge des Ernteguts (2) ermittelbar ist.

8. Verfahren nach Anspruch 7, **dadurch gekennzeichnet, dass** die Informationen betreffend die Geometrie des Silos (1) im Zuge der Befahrung des Silos (1) mit dem Verteilfahrzeug (4) mittels der Sensoreinrichtung (6) erfasst werden.

9. Verfahren nach Anspruch 7 oder 8, **dadurch gekennzeichnet, dass** der Steuereinrichtung (7) zusätzlich Informationen betreffend ein Füllvolumen des Schiebeschilds (5) zugeleitet werden, sodass mittels der Steuereinrichtung (7) die Arbeitshöhe (8) des Schiebeschilds (5) derart eingestellt wird, dass eine infolge der Arbeitshöhe (8) effektiv an der Abladestelle (3) übernommene Erntegutmenge auf einen ermittelten Erntegutbedarf abgestimmt ist, der notwendig ist, um die jeweils zu erstellende Erntegutschicht (9) mit der vordefinierten Schichthöhe (10) fertigzustellen.

10. Verfahren nach einem der Ansprüche 7 bis 9, **dadurch gekennzeichnet, dass** mittels der Sensoreinrichtung (6) Informationen betreffend ein Volumen von an der Abladestelle (3) befindlichem Erntegut (2) erfasst werden, die sodann an die Steuereinrichtung (7) geleitet werden, wobei die Steuereinrichtung (7) anhand einer verfügbaren Information betreffend die Leistungsfähigkeit des Verteilfahrzeugs (4) die Arbeitshöhe (8) des Schiebeschilds (5) derart steuert, dass lediglich ein Teil des an der Abladestelle (3) befindlichen Ernteguts (2) mittels des Schiebeschilds (5) erfasst wird, sodass die zur Verarbeitung des erfassten Ernteguts (2) erforderliche Leistung nicht die Leistungsfähigkeit des Verteilfahrzeugs (4) überschreitet.

11. Verteilfahrzeug (4) zur Verteilung und Verdichtung von Erntegut (2) in einem Silo (1), insbesondere einem Flachsilo, umfassend
- mindestens ein zumindest höhenverstellbares Schiebeschild (5), mittels dessen an dem Silo (1) abgeladenes Erntegut (2) übernehmbar und in dem Silo (1) verteilbar ist, und
- mindestens eine Antriebseinrichtung (13) zur Verstellung einer Arbeitshöhe (8) des Schiebeschildes (5),
**gekennzeichnet durch**
- mindestens eine Sensoreinrichtung (6), mittels derer Informationen betreffend eine Oberflächentopographie von bereits in das Silo (1) eingebrachten Ernteguts (2) erfassbar ist,
- mindestens eine Steuereinrichtung (7), mittels derer die Informationen verarbeitbar sind,
wobei die Steuereinrichtung (7) geeignet ist, die Antriebseinrichtung (13) des Schiebeschilds (5) anzusteuern, sodass die Arbeitshöhe (8) derart automatisch einstellbar ist, dass sukzessive Erntegutschichten (9) mit in sich zumindest im Wesentlichen gleichmäßiger Schichthöhe (10) aufschichtbar sind.

12. Verteilfahrzeug (4) nach Anspruch 11, **dadurch gekennzeichnet, dass** die Sensoreinrichtung (6) einen Laser, eine Kamera, einen Ultraschallsensor und/oder einen Radar umfasst.

13. Verteilfahrzeug (4) nach Anspruch 11 oder 12, **dadurch gekennzeichnet, dass** die Sensoreinrichtung (6) in einer Höhe (14) von mindestens 1,0 m, vorzugsweise mindestens 1,5 m, weiter vorzugsweise mindestens 2,0 m, oberhalb einer unteren Aufstandsfläche (15) des Verteilfahrzeugs (4) angeordnet ist.

14. Verteilfahrzeug (4) nach Anspruch 13, **dadurch gekennzeichnet, dass** die Sensoreinrichtung (6) an einem oberen Ende einer Fahrerkabine (16) des Verteilfahrzeugs (4) angeordnet ist.

15. Verteilfahrzeug (4) nach einem der Ansprüche 11 bis 14, **gekennzeichnet durch** mindestens ein Messmittel, mittels dessen eine absolute Position des Verteilfahrzeugs (4) im Raum, eine Neigung des Verteilfahrzeugs (4) um dessen Längsachse, eine Neigung des Verteilfahrzeugs (4) um dessen Querachse und/oder eine Fahrrichtung des Verteilfahrzeugs (4) erfassbar ist.

## Claims

1. A method of filling a silo (1) with crop material (2), in particular a flat silo with chopped corn, including the following method steps:
a) crop material (2) is unloaded at an unloading location (3) at the silo (1),
b) the unloaded crop material (2) is introduced into the silo (1) by means of a distribution vehicle (4), wherein the crop material (2) is distributed within the silo (1) by means of a pushing blade (5) of the distribution vehicle (4) and in that case is successively piled up,
c) in the course of the introduction of further crop material (2) into the silo crop material (2) which has already been introduced is driven over by means of the distribution vehicle (4) whereby the crop material (2) is compacted,
**characterised by** the following method steps:
d) by means of a sensor device (6) arranged on the distribution vehicle (4) information concerning a surface topography of the crop material (2) already introduced into the silo (1) is continuously detected at least in the course of the crop material (2) being driven over, which information is then passed to a control device (7), and
e) the information is processed by means of the control device (7) so that the control device (7) is suitable for controlling a working height (8) of the pushing blade (5) in such a way that the crop material (2) is successively piled up in crop material layers (9) of an at least substantially uniform layer height (10).

2. A method according to claim 1 **characterised in that** relative and/or absolute position data of the distribution vehicle (4) are continuously detected, wherein preferably the information detected by means of the sensor device (6) is combined with the position data in such a way that a three-dimensional image of a surface of the crop material (2) is produced.

3. A method according to claim 2 **characterised in that** the position data are ascertained by means of an odometry model, wherein at least one travel speed and a steering angle of the distribution vehicle (4) are taken into account.

4. A method according to claim 2 or claim 3 **characterised in that** a change in position of the distribution vehicle (4) is continuously detected, wherein preferably changes in the absolute position of the distribution vehicle (4) in space, an inclination of the distribution vehicle (4) about its longitudinal axis, an inclination of the distribution vehicle (4) about its transverse axis and/or a direction of travel of the distribution vehicle (4) are taken into account.

5. A method according to one of claims 1 to 4 **characterised in that** the layer heights (10) of the individual crop material layers (9) are respectively predefined, wherein progressive adaptation of the working height (8) of the pushing blade (5) corresponding to the predefined layer height (10) of the crop material layer (9) respectively coming into existance is effected by means of the control device (7).

6. A method according to one of claims 1 to 5 **characterised in that** in the course of the introduction of a respective crop material layer (9) the working height (8) of the pushing blade (5) is continuously altered in dependence on the detected information of the sensor device (6) so that in the course of the introduction of the respective crop material layer (9) a flat surface topography of the crop material (2) is established at least in a plateau region (11) of the silo (1).

7. A method according to one of claims 1 to 6 **characterised in that** the control device (7) additionally receives information concerning a geometry of the silo (1), by means of which an amount of crop material (2) required to be introduced to achieve the predefined layer height (10) of a crop material layer (9) to be respectively introduced can be ascertained.

8. A method according to claim 7 **characterised in that** the information concerning the geometry of the silo (1) is detected by means of the sensor device (6) in the course of the distribution vehicle (4) driving over the silo (1).

9. A method according to claim 7 or claim 8 **characterised in that** the control device (7) additionally receives information concerning a filling volume of the pushing blade (5) so that the working height (8) of the pushing blade (5) is adjusted by means of the control device (7) in such a way that a crop material amount which is effectively taken over at the unloading location (3) as a consequence of the working height (8) is matched to an ascertained crop material need which is necessary to finish the crop material layer (9) that is respectively to be brought into existence with the predefined layer height (10).

10. A method according to one of claims 7 to 9 **characterised in that** information concerning a volume of crop material (2) which is at the unloading location (3) is detected by means of the sensor device (6) and is then passed to the control device (7), wherein the control device (7) on the basis of available information concerning the performance of the distribution vehicle (4) controls the working height (8) of the pushing blade (5) in such a way that only a part of the crop material (2) disposed at the unloading location (3) is engaged by means of the pushing blade (5) so that the power required for processing of the engaged crop material (2) does not exceed the performance of the distribution vehicle (4).

11. A distribution vehicle (4) for the distribution and compacting of crop material (2) in a silo (1), in particular a flat silo, including
- at least one at least height-adjustable pushing blade (5), by means of which crop material (2) unloaded at the silo can be taken over and distributed in the silo (1), and
- at least one drive device (13) for adjusting a working height (8) of the pushing blade (5),
**characterised by**
- at least one sensor device (6), by means of which information concerning a surface topography of crop material (2) already introduced into the silo (1) can be detected,
- at least one control device (7), by means of which the information can be processed,
wherein the control device (7) is suitable for actuating the drive device (13) of the pushing blade (5) so that the working height (8) is automatically adjustable in such a way that successive crop material layers (9) can be piled up with an at least substantially uniform layer height (10).

12. A distribution vehicle (4) according to claim 11 **characterised in that** the sensor device (6) includes a laser, a camera, an ultrasound sensor and/or a radar.

13. A distribution vehicle (4) according to claim 11 or claim 12 **characterised in that** the sensor device (6) is arranged at a height (14) of at least 1.0 m, preferably at least 1.5 m, further preferably at least 2.0 m, above a lower surface (15) on which the distribution vehicle (4) stands.

14. A distribution vehicle (4) according to claim 13 **characterised in that** the sensor device (6) is arranged at an upper end of a driving cab (16) of the distribution vehicle (4).

15. A distribution vehicle (4) according to one of claims 11 to 14 **characterised by** at least one measuring means, by means of which an absolute position of the distribution vehicle (4) in space, an inclination of the distribution vehicle (4) about its longitudinal axis, an inclination of the distribution vehicle (4) about its transverse axis and/or a direction of travel of the distribution vehicle (4) can be detected.

## Revendications

1. Procédé de remplissage d'un silo (1) avec du produit récolté (2), en particulier d'un silo plat avec du maïs haché, incluant les étapes de procédé suivantes :
a) le produit récolté (2) est déchargé en un point de déchargement (3) au niveau du silo (1) .
b) Le produit récolté déchargé (2) est apporté dans le silo (1) au moyen d'un véhicule de répartition (4), le produit récolté (2) étant réparti à l'intérieur du silo (1) à l'aide d'une lame (5) du véhicule de répartition (4) et étant ainsi disposé par couches successives.
c) Au fur et à mesure que du produit récolté supplémentaire (2) est apporté dans le silo (1), le produit récolté déjà apporté (2) est roulé au moyen du véhicule de répartition (4), de sorte que le produit récolté (2) est compacté,
**caractérisé par** les étapes de procédé suivantes :
d) au moyen d'un équipement de capteur (6) disposé sur le véhicule de répartition (4), au fur et à mesure que le produit récolté (2) est roulé, des informations relatives à une topographie superficielle du produit récolté (2) déjà apporté dans le silo (1) sont recueillies en continu, lesquelles sont ensuite transmises à un équipement de commande (7).
e) Au moyen de l'équipement de commande (7), les informations sont traitées, l'équipement de commande (7) étant apte à commander une hauteur de travail (8) de la lame (5), de façon que le produit récolté (2) soit entassé de manière successive par couches de produit récolté (9) avec une hauteur de couche (10) en soi au moins sensiblement régulière.

2. Procédé selon la revendication 1, **caractérisé en ce que** des données de position relatives et/ou absolues du véhicule de répartition (4) sont recueillies en continu, de préférence les informations recueillies au moyen de l'équipement de capteur (6) étant combinées avec les données de position, de façon à obtenir une représentation tridimensionnelle d'une surface du produit récolté (2).

3. Procédé selon la revendication 2, **caractérisé en ce que** les données de position sont recueillies au moyen d'un modèle odométrique, au moins une vitesse de marche et un angle de braquage du véhicule de répartition (4) étant pris en compte.

4. Procédé selon la revendication 2 ou 3, **caractérisé en ce qu'**une variation de position du véhicule de répartition (4) est détectée en continu, de préférence des variations de la position absolue du véhicule de répartition (4) dans l'espace, une inclinaison du véhicule de répartition (4) autour de son axe longitudinal, une inclinaison du véhicule de répartition (4) autour de son axe transversal et/ou un sens de la marche du véhicule de répartition (4) étant pris en compte.

5. Procédé selon une des revendications 1 à 4, **caractérisé en ce que** les hauteurs de couches (10) des couches individuelles de produit récolté (9) sont respectivement prédéfinies, au moyen de l'équipement de commande (7) une adaptation en continu de la hauteur de travail (8) de la lame (5) étant effectuée en fonction de la hauteur de couche prédéfinie (10) de la couche de produit récolté (9) respectivement en cours de réalisation.

6. Procédé selon une des revendications 1 à 5, **caractérisé en ce qu'**au fur et à mesure de l'apport d'une couche de produit récolté respective (9), la hauteur de travail (8) de la lame (5) est modifiée en continu en fonction des informations de l'équipement de capteur (6) recueillies, de façon qu'au fur et à mesure de l'apport de la couche de produit récolté respective (9), une topographie superficielle plane du produit récolté (2) soit réalisée au moins dans une zone de plateau (11) du silo (1).

7. Procédé selon une des revendications 1 à 6, **caractérisé en ce qu'**à l'équipement de commande (7) sont en outre transmises des informations relatives à la géométrie du silo (1), au moyen desquelles peut être déterminée une quantité d'apport de produit récolté (2) nécessaire pour atteindre la hauteur de couche prédéfinie (10) d'une couche de produit récolté (9) respectivement à apporter.

8. Procédé selon la revendication 7, **caractérisé en ce que** les informations relatives à la géométrie du silo (1) sont recueillies au moyen de l'équipement de capteur (6) au fur et à mesure que le véhicule de répartition (4) parcourt le silo (1).

9. Procédé selon la revendication 7 ou 8, **caractérisé en ce qu'**à l'équipement de commande (7) sont en outre transmises des informations relatives à un volume de remplissage de la lame (5), de sorte qu'au moyen de l'équipement de commande (7) peut être réglée la hauteur de travail (8) de la lame (5), de façon qu'une quantité de produit récolté effectivement prise en charge au point de déchargement (3) en fonction de la hauteur de travail (8) soit adaptée à un besoin déterminé en produit récolté qui est nécessaire pour achever, avec la hauteur de couche prédéfinie (10), la couche de produit récolté (9) respectivement à réaliser.

10. Procédé selon une des revendications 7 à 9, **caractérisé en ce qu'**au moyen de l'équipement de capteur (6) sont recueillies des informations relatives à un volume de produit récolté (2) se trouvant au point de déchargement (3), lesquelles sont ensuite transmises à l'équipement de commande (7), l'équipement de commande (7) commandant, à l'aide d'une information disponible relative à la puissance du véhicule de répartition (4), la hauteur de travail (8) de la lame (5), de façon que seule une partie du produit récolté (2) se trouvant au point de déchargement (3) soit prise en charge au moyen de la lame (5), de façon que la puissance nécessaire au traitement du produit récolté (2) pris en charge n'excède pas la puissance du véhicule de répartition (4).

11. Véhicule de répartition (4) pour répartir et compacter du produit récolté (2) dans un silo (1), en particulier dans un silo plat, incluant
- au moins une lame au moins réglable en hauteur (5), à l'aide de laquelle du produit récolté (2) déchargé au silo (1) peut être pris en charge et réparti dans le silo (1), et
- au moins un équipement d'entraînement (13) pour régler une hauteur de travail (8) de la lame (5),
**caractérisé par**
- au moins un équipement de capteur (6) au moyen duquel des informations relatives à une topographie superficielle de produit récolté (2) déjà apporté au silo (1) peuvent être recueillies,
- au moins un équipement de commande (7) au moyen duquel les informations peuvent être traitées,
l'équipement de commande (7) étant apte à commander l'équipement d'entraînement (13) de la lame (5), de façon que la hauteur de travail (8) soit réglable automatiquement, de façon que des couches successives de produit récolté (9) puissent être entassées avec une hauteur de couche (10) au moins sensiblement régulière.

12. Véhicule de répartition (4) selon la revendication 11, **caractérisé en ce que** l'équipement de capteur (6) inclut un laser, une caméra, un capteur à ultrasons et/ou un radar.

13. Véhicule de répartition (4) selon la revendication 11 ou 12, **caractérisé en ce que** l'équipement de capteur (6) est disposé à une hauteur (14) d'au moins 1,0 m, de préférence d'au moins 1,5 m, plus préférentiellement d'au moins 2,0 m, au-dessus d'une surface inférieure de contact au sol (15) du véhicule de répartition (4) .

14. Véhicule de répartition (4) selon la revendication 13, **caractérisé en ce que** l'équipement de capteur (6) est disposé à une extrémité supérieure d'une cabine de conduite (16) du véhicule de répartition (4).

15. Véhicule de répartition (4) selon une des revendications précédentes 11 à 14, **caractérisé par** au moins un moyen de mesure à l'aide duquel une position absolue du véhicule de répartition (4) dans l'espace, une inclinaison du véhicule de répartition (4) autour de son axe longitudinal, une inclinaison du véhicule de répartition (4) autour de son axe transversal et/ou un sens de la marche du véhicule de répartition (4) sont pris en compte.
